# EUROPÄISCHE PATENTSCHRIFT

(11) **EP 1 428 717 B1**
(45) Veröffentlichungstag und Bekanntmachung des Hinweises auf die Patenterteilung: **02.09.2009**
(21) Anmeldenummer: 03400063.8
(22) Anmeldetag: 30.10.2003
(51) Int. Cl.: B60N 2/02, H01H 25/00

(54) **Sitzverstellschalter**
Seat adjusting switch
Commutateur de réglage de siège

(30) Priorität: 13.12.2002 DE 10260318
(43) Veröffentlichungstag der Anmeldung: 16.06.2004
(73) Patentinhaber: Valeo Schalter und Sensoren GmbH, 74321 Bietigheim-Bissingen (DE)
(72) Erfinder: Mahler, Reinhard, 74372 Sersheim (DE); Petzold, Manuel, 74321 Bietigheim (DE); Weber, Markus, 75015 Bretten (DE)
(74) Vertreter: Pothmann, Karsten

(56) Entgegenhaltungen:
- DE-A1- 3 927 037
- DE-C1- 3 933 561
- DE-C1- 19 728 743
- DE-U1- 29 500 869
- US-A- 5 844 182

## Beschreibung

Die Erfindung betrifft einen Sitzverstellschalter für ein Kraftfahrzeug, mit zwei Tasten, die in Längsrichtung gegeneinander verschieblich und in Querrichtung miteinander gekoppelt an einem Schaltergehäuse befestigt sind, mit den Merkmalen des Oberbegriffs des Anspruchs 1.

Aus der DE 198 44 333 C ist ein elektrischer Sitzverstellschalter bekannt geworden, welcher mehrere Tasten aufweist. Dabei entsprechen die Tasten jeweils einem Sitzteil und sind sinnfällig auslenkbar. Dies bedeutet, dass die Taste in die Richtung auslenkbar ist, in welcher sich das entsprechende Sitzteil bewegen soll. Dieser bekannte Sitzverstellschalter weist jedoch den Nachteil auf, dass er aus einer Vielzahl von Bauteilen aufgebaut ist.

Aus der DE 39 333 561 C ist ein Sitzverstellschalter mit den Merkmalen des Oberbegriffs bekannt. Die 39 27 037 A zeigt eine elektrische Schalteranordnung mit einem Betätigungsteil und einem daran verstellbar gehaltenen Schaltglied. Die US 5,844,182 zeigt mehrere über Bedienelemente miteinander gekoppelte Schaltmodule. Aus der DE 197 28 743 C ist die Befestigung eines Bedienelements an sphärische Enden aufweisenden Stößeln der Schaltmodule bekannt.

Der Erfindung liegt daher die Aufgabe zugrunde, einen Sitzverstellschalter bereitzustellen, welcher gleichermaßen gut bedienbar ist, jedoch mit einer geringeren Anzahl an Bauteilen auskommt und bei dem das Bedienelement unabhängig vom Schalter ist.

Diese Aufgabe wird erfindungsgemäß mit einem Sitzverstellschalter gelöst, der die Merkmale des Anspruchs 1 aufweist.

Die Vierquadrantenschalter besitzen insgesamt acht Verstellrichtungen, so dass die beiden Tasten jeweils in vier Richtungen verstellt werden können. Gegenüber dem Stand der Technik gemäß der DE 198 44 333 C1 wird ein Mikroschalter eingespart, wobei jedoch alle Funktionen beibehalten bleiben. Außerdem ist der Vierquadrantenschalter in sich ein separat handhabbares Bauteil und muss lediglich zum Beispiel auf eine Platine aufgelötet werden. Der Vierquadrantenschalter wird nicht, wie beim oben genannten Stand der Technik, innerhalb des Sitzverstellschalters aufgebaut, so dass Probleme hinsichtlich einzustellender Toleranzen vermieden werden.

Erfindungsgemäß weist jede Taste oder dessen Schaltstück eine Aufnahme für ein Betätigungselement des Vierquadrantenschalters auf. Über diese Aufnahme wird die Taste mit dem Vierquadrantenschalter gekoppelt, so dass die Schaltbefehle an den Vierquadrantenschalter direkt übergeben werden können. Eine einfache Montage wird dadurch gewährleistet, dass die Aufnahme insbesondere eine zylindrische, z.B. kreiszylindrische Hülse aufweist. Erfindungsgemäß ist das Betätigungselement ein Betätigungsstößel mit einem kugelförmigen freien Ende. Das kugelförmige freie Ende kann problemlos in die kreiszylindrische Hülse eingesetzt werden, und die Bewegungen der Taste werden aus einer Ebene auf eine Kreisbahn übertragen. Da das kugelförmige freie Ende spielfrei in die Aufnahmehülse eingesetzt ist, kann sehr präzise geschaltet werden. Erfindungsgemäß ist das kugelförmige freie Ende auf den Stößel aufgerastet und wird von einem separaten Bauteil gebildet. Auf diese Weise können Vierquadrantenschalter verwendet werden, deren Betätigungsstößel beliebig ausgebildet ist.

Bei einer Weiterbildung ist vorgesehen, dass die beiden Vierquadrantenschalter auf einer gemeinsamen Platine sitzen. Durch diese Maßnahme wird gewährleistet, dass die beiden Schalter eine definierte Position zueinander aufweisen und somit nicht nur Schaltkräfte übertragen werden können, sondern auch Haltekräfte für andere Bauteile des Sitzverstellschalters, insbesondere zum Befestigen dieser Bauteile.

Bevorzugt weist jede Taste ein das Schaltergehäuse überragendes Bedienelement und ein auf der Rückseite einer Gehäusewand vorgesehenes Schaltstück auf. Dabei durchgreift das Bedienelement und/oder das Schaltstück die Gehäusewand über einen Durchbruch. Das Bedienelement und das Schaltstück sind über eine Verrastung miteinander verbunden. Hierdurch wird die Bedienbewegung, die am Bedienelement auf den Sitzverstellschalter wirkt, in das Innere des Schaltergehäuses und auf die im Schaltergehäuse angeordneten Vierquadrantenschalter übertragen. Die Längsschlitze in der Gehäusewand gewährleisten, dass die Bedienelemente und/oder die Schaltstücke, welche die Gehäusewand über den Längsschlitz durchgreifen, nicht kippen.

Bei einem bevorzugten Ausführungsbeispiel sind die Tasten über ineinander geschachtelte Schaltstücke in Längsrichtung verschiebbar geführt. Die Schaltstücke sind in Längsrichtung gegeneinander verlagerbar, wohingegen das eine Schaltstück in Querrichtung nahezu spielfrei im anderen Schaltstück gelagert ist.

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in den Ansprüchen und in der Beschreibung erwähnten Merkmale jeweils einzeln für sich oder in beliebiger Kombination erfindungswesentlich sein.

In der Zeichnung zeigen:
- Figur 1: eine Explosionsdarstellung des erfindungsgemäßen Sitzverstellschalters;
- Figur 2: eine Seitenansicht des Sitzverstellschalters;
- Figur 3: einen Schnitt III-III gemäß Figur 2; und
- Figur 4: einen Schnitt IV-IV gemäß Figur 2.

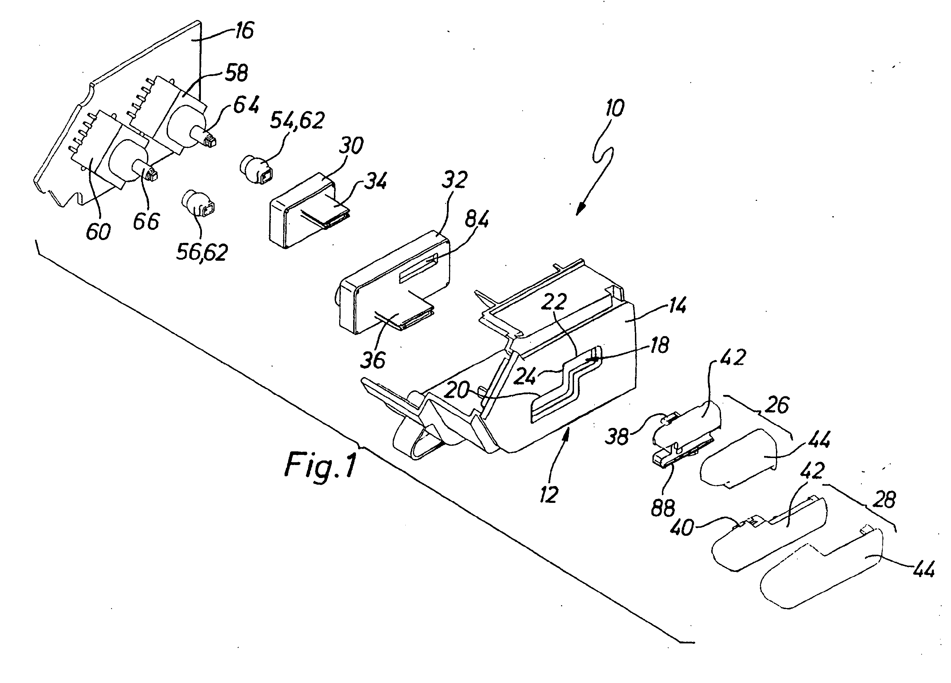

In der Figur 1 ist mit dem Bezugszeichen 10 insgesamt ein Sitzverstellschalter dargestellt, wie er zum Beispiel in Kraftfahrzeugen verwendet wird. Dieser Sitzverstellschalter 10 weist ein Schaltergehäuse 12 mit einer Gehäusewand 14 auf, welches auf eine Platine 16 aufgesetzt ist. Dabei kann die Platine 16 direkt oder über weitere Bauteile mit dem Gehäuse 12 verbunden sein. Die Gehäusewand 14 weist einen gestuften Durchbruch 18 auf, der zwei in Längsrichtung verlaufende Abschnitte 20 und 22 und einen in Querrichtung, die beiden Abschnitte 20 und 22 verbindenden dritten Abschnitt 24, aufweist. Dabei befinden sich die Tasten 26 und 28 auf der Außenseite der Gehäusewand 14, wohingegen auf der gegenüberliegenden Innenseite der Gehäusewand 14, das heißt im Innern des Schaltergehäuses 12, zwei Schaltstücke 30 und 32 vorgesehen sind. Jedes Schaltstück 30 und 32 besitzt ein in Richtung der zugehörenden Taste 26 und 28 abragendes Raststück 34 und 36, in welches eine Rastzunge 38 und 40 der jeweiligen Taste 26 und 28 einrasten kann. Die Tasten 26 und 28 bestehen aus einem Schalenträger 42 sowie einer Schale 44. Dabei kann die Schale hinsichtlich Material und/oder Farbe dem Interieur des Kraftfahrzeugs angepasst sein.

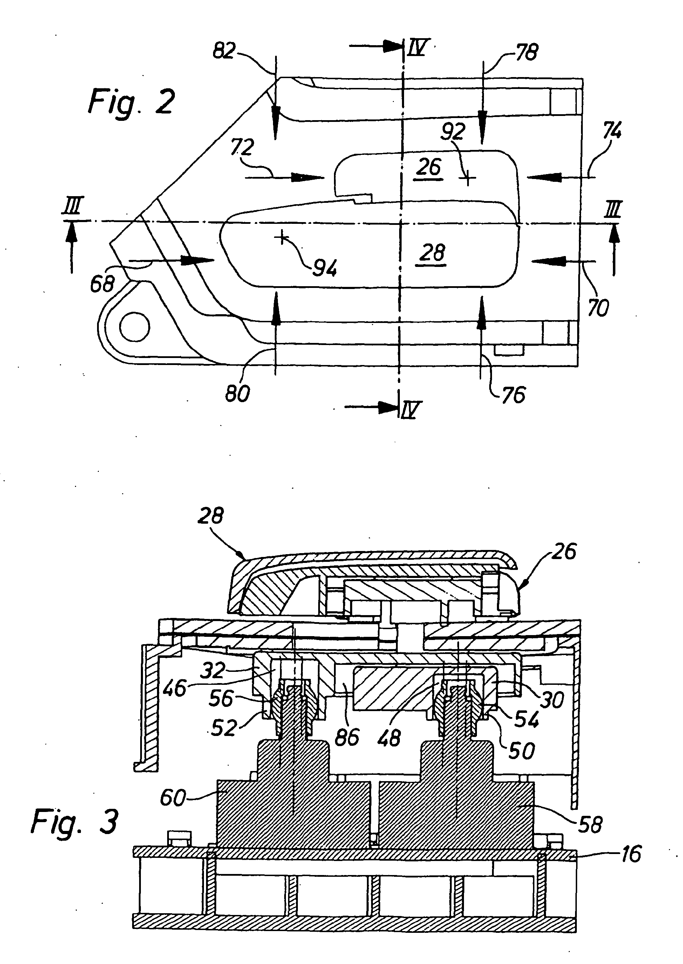

Die beiden Schaltstücke 30 und 32 weisen an ihrer Rückseite, das heißt an ihrer den Tasten 26 und 28 abgewandten Seite, zwei Aufnahmen 46 und 48 auf (Figur 3), die als Aufnahmehülse 50 und 52 ausgebildet sind, und in welche jeweils ein kugelförmiges freies Ende 54 und 56 eines Vierquadrantenschalters 58 und 60 aufgenommen ist. Die kugelförmigen freien Enden 54 und 56 sind als auf die Betätigungsstößel 64 und 66 der Vierquadrantenschalter 58 und 60 aufrastbare Bauteile 62 ausgebildet.

In der Figur 2 sind die Bewegungsrichtungen der Tasten 26 und 28 im Einzelnen dargestellt. Dabei kann zum Beispiel die Taste 28 in Längsrichtung nach vorne (Pfeil 68) oder in Längsrichtung nach hinten (Pfeil 70) unabhängig von der Taste 26 betätigt werden. Ebenso kann die Taste 26 in Richtung des Pfeils 72 nach vorne beziehungsweise in Richtung des Pfeils 74 nach hinten bewegt werden, unabhängig von der Taste 28. In Richtung des Pfeils 76 können jedoch nur die beiden vorderen Teile der Tasten 26 und 28 gemeinsam bewegt werden, was auch in Richtung des Pfeils 78 gilt, der die Richtung nach unten zeigt. Dabei bewegt sich zum Beispiel der vordere Teil eines Fahrzeugsitzes nach oben (Pfeil 76) oder nach unten (Pfeil 78). Ebenso können die beiden Tasten 26 und 28 nur gemeinsam in Richtung der Pfeile 80 bzw. 82 bewegt werden, wobei sich der hintere Teil eines Fahrzeugsitzes entweder nach oben (Pfeil 80) oder nach unten (Pfeil 82) bewegt.

Dies wird dadurch bewirkt, dass die beiden Schaltstücke 30 und 32 ineinander geschachtelt sind, wobei das Schaltstück 30 im Schaltstück 32 geführt ist und das Raststück 34 das Schaltstück 32 über einen Längsschlitz 84 durchgreift. Dieser Längsschlitz 84 erlaubt lediglich eine Verschiebung des Schaltstückes 30 in Längsrichtung, das heißt in Richtung der Pfeile 72 und 74. Ebenso kann das Schaltstück 32 unabhängig vom Schaltstück 30 aufgrund dieses Längsschlitzes 84 in Richtung der Pfeile 68 und 70 verschoben werden.

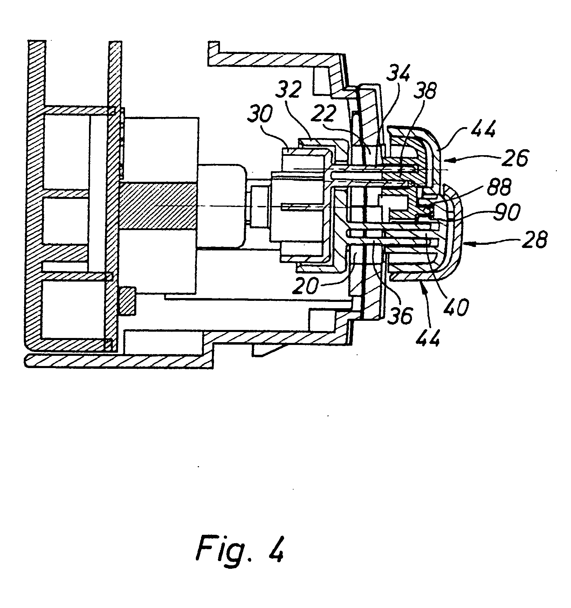

In der Figur 3 ist mit dem Bezugszeichen 86 der Aufnahmeraum für das Schaltstück 30 im Schaltstück 32 bezeichnet. Aus der Figur 4 wird deutlich erkennbar, dass die beiden Schaltstücke 30 und 32 in Querrichtung, das heißt in Richtung der Pfeile 76 bis 82, nur gemeinsam bewegt werden können, da sie nahezu spielfrei in dieser Richtung ineinander greifen. Da die Schaltstücke 30 und 32 relativ groß dimensioniert sind, wird über sie auch ein Kippen der Bedienelemente, die sich zusätzlich an der Außenwand des Schaltergehäuses 12 abstützen, verhindert.

Aus Figur 4 wird außerdem erkennbar, dass zusätzlich der Schalenträger 42 der Taste 26 eine Gleitfeder 88 aufweist, die in eine entsprechende Gleitnut 90 im Schalenträger 42 der Taste 28 eingreift. Die Gleifeder 88 und die Gleitnut 90 bilden eine weitere Längsführung.

Die Figur 2 zeigt mit dem Bezugszeichen 92 und 94 zwei Angriffspunkte, an welchen die beiden Tasten 26 und 28 mit den Vierquadrantenschaltern 58 und 60 gekoppelt sind. Es ist deutlich erkennbar, dass das hintere Ende der Taste 28 mit dem Vierquadrantenschalter 60 und das vordere Ende der Taste 26 mit dem Vierquadrantenschalter 58 gekoppelt ist. Die Kopplung erfolgt dabei nicht direkt, sondern über die beiden Schaltstücke 30 und 32.

## Patentansprüche

1. Sitzverstellschalter für ein Kraftfahrzeug, mit zwei Tasten (26 und 28), die in Längsrichtung gegeneinander verschieblich und in Querrichtung miteinander gekoppelt an einem Schaltergehäuse (12) befestigt sind, wobei jede Taste (26 und 28) mit einem Vierquadrantenschalter (58 und 60) verbunden ist, dass der eine Vierquadrantenschalter (58) am einen Längsende der einen Taste (26) und dass der andere Vierquadrantenschalter (60) am anderen, entfernt liegenden Längsende der anderen Taste (28) angreift, **dadurch gekennzeichnet, dass** jede Taste (26 und 28) oder dessen Schaltstück (30 und 32) eine Aufnahme (46 und 48) für ein Betätigungselement des Vierquadrantenschalters (58 und 60) aufweist, wobei das Betätigungselement ein Betätigungsstößel (64 und 66) mit einem kugelförmigen freien Ende (54 und 56) ist, das auf den Stößel (64 und 66) aufgerastet ist.

2. Sitzverstellschalter nach Anspruch 1, **dadurch gekennzeichnet, dass** die beiden Vierquadrantenschalter (58 und 60) auf einer gemeinsamen Platine (16) sitzen.

3. Sitzverstellschalter nach einem der vorhergehenden Ansprüche, **dadurch gekennzeichnet, dass** jede Taste (26 und 28) ein das Schaltergehäuse (12) überragendes Bedienelement und ein auf der Rückseite einer Gehäusewand (14) vorgesehenes Schaltstück (30 und 32) aufweist.

4. Sitzverstellschalter nach Anspruch 3, **dadurch gekennzeichnet, dass** das Bedienelement und/oder das Schaltstück (30 und 32) über einen Durchbruch (18) die Gehäusewand (14) durchgreift beziehungsweise durchgreifen.

5. Sitzverstellschalter nach Anspruch 3 oder 4, **dadurch gekennzeichnet, dass** das Bedienelement und das Schaltstück (30 und 32) über eine Verrastung (34 bis 40) miteinander verbunden sind.

6. Sitzverstellschalter nach einem der vorhergehenden Ansprüche, **dadurch gekennzeichnet, dass** die Aufnahme (46 und 48) eine zylindrische, insbesondere kreiszylindrische, Aufnahmehülse (50 und 52) aufweist.

7. Sitzverstellschalter nach einem der vorhergehenden Ansprüche, **dadurch gekennzeichnet, dass** die Aufnahmehülse (50, 52) das kugelförmige freie Ende (54, 56) spielfrei aufnimmt.

8. Sitzverstellschalter nach einem der vorhergehenden Ansprüche, **dadurch gekennzeichnet, dass** die Tasten (26 und 28) über ineinander geschachtelte Schaltstücke (30 und 32) in Längsrichtung verschiebbar geführt sind.

## Claims

1. Seat adjustment switch for a motor vehicle, with two buttons (26 and 28) which are fastened to a switch housing (12) in a manner such that they are displaceable relative to each other in the longitudinal direction and are coupled to each other in the transverse direction, wherein each button (26 and 28) is connected to a four-quadrant switch (58 and 60), wherein the one four-quadrant switch (58) connects on a longitudinal end of one button (26) and wherein the other four-quadrant switch (60) acts on the other, remote longitudinal end of the other button (28), **characterized in that** each button (26 and 28) or switching component (30 and 32) thereof has a receptacle (46 and 48) for an actuating element of the four-quadrant switch (58 and 60), the actuating element being an actuating ram (64 and 66) with a spherical free end (54 and 56) which latches onto the ram (64 and 66).

2. Seat adjustment switch according to Claim 1, **characterized in that** the two four-quadrant switches (58 and 60) sit on a common printed circuit board (16).

3. Seat adjustment switch according to one of the preceding claims, **characterized in that** each button (26 and 28) has an operating element protruding over the switch housing (12) and a switching component (30 and 32) provided on the rear side of a housing wall (14).

4. Seat adjustment switch according to Claim 3, **characterized in that** the operating element and/or the switching component (30 and 32) reach and/or reaches through the housing wall (14) via an aperture (18).

5. Seat adjustment switch according to Claim 3 or 4, **characterized in that** the operating element and the switching component (30 and 32) are connected to each other via a latching connection (34 to 40).

6. Seat adjustment switch according to one of the preceding claims, **characterized in that** the receptacle (46 and 48) has a cylindrical, in particular circular cylindrical, receiving sleeve (50 and 52).

7. Seat adjustment switch according to one of the preceding claims, **characterized in that** the receiving sleeve (50, 52) receives the spherical free end (54, 56) in a manner free from play.

8. Seat adjustment switch according to one of the preceding claims, **characterized in that** the buttons (26 and 28) are guided displaceably in the longitudinal direction via interleaved switching components (30 and 32).

## Revendications

1. Commutateur de réglage de siège pour un véhicule automobile, comprenant deux touches (26 et 28) qui sont fixées sur un boîtier de commutateur (12), de manière à être déplaçables l'une vers l'autre dans la direction longitudinale et accouplées l'une à l'autre dans la direction transversale, chaque touche (26 et 28) étant connectée à un commutateur à quatre quadrants (58 et 60), l'un des commutateurs à quatre quadrants (58) venant en prise à une extrémité longitudinale d'une touche (26) et l'autre commutateur à quatre quadrants (60) venant en prise à l'autre extrémité longitudinale, plus éloignée, de l'autre touche (28), **caractérisé en ce que** chaque touche (26 et 28) ou son élément de commutation (30 et 32) présente un logement (46 et 48) pour un élément d'actionnement du commutateur à quatre quadrants (58 et 60), l'élément d'actionnement étant un poussoir d'actionnement (64 et 66) avec une extrémité libre en forme de bille (54 et 56) qui est encliquetée sur le poussoir (64 et 66).

2. Commutateur de réglage de siège selon la revendication 1, **caractérisé en ce que** les deux commutateurs à quatre quadrants (58 et 60) reposent sur une platine commune (16).

3. Commutateur de réglage de siège selon l'une quelconque des revendications précédentes, **caractérisé en ce que** chaque touche (26 et 28) présente un élément de commande venant en prise par-dessus le boîtier de commutateur (12) et un organe de commutation (30 et 32) prévu sur le côté arrière d'une paroi du boîtier (14).

4. Commutateur de réglage de siège selon la revendication 3, **caractérisé en ce que** l'élément de commande et/ou l'organe de commutation (30 et 32) vient ou viennent en prise par le biais d'un perçage (18) avec la paroi du boîtier (14).

5. Commutateur de réglage de siège selon la revendication 3 ou 4, **caractérisé en ce que** l'élément de commande et l'organe de commutation (30 et 32) sont connectés l'un à l'autre par le biais d'un encliquetage (34 à 40).

6. Commutateur de réglage de siège selon l'une quelconque des revendications précédentes, **caractérisé en ce que** le logement (46 et 48) présente une douille de logement (50 et 52) cylindrique, en particulier cylindrique circulaire.

7. Commutateur de réglage de siège selon l'une quelconque des revendications précédentes, **caractérisé en ce que** la douille de logement (50, 52) reçoit sans jeu l'extrémité libre en forme de bille (54, 56).

8. Commutateur de réglage de siège selon l'une quelconque des revendications précédentes, **caractérisé en ce que** les touches (26 et 28) sont guidées de manière déplaçable dans la direction longitudinale par le biais d'organes de commutation (30 et 32) emboîtés l'un dans l'autre.
